# EUROPEAN PATENT APPLICATION

(11) **EP 3 879 367 A2**
(43) Date of publication of application: **15.09.2021**
(21) Application number: 21162013.3
(22) Date of filing: 11.03.2021
(51) Int. Cl.: G05B 19/05, G05B 19/042

(54) **PRODUCTION SYSTEM, DATA TRANSMISSION METHOD, AND PROGRAM**

(30) Priority: 13.03.2020 JP 2020044723
(71) Applicant: Kabushiki Kaisha Yaskawa Denki, Kitakyushu-shi, Fukuoka 806-0004 (JP)
(72) Inventor: NAGATA, Takeshi, Kitakyushu-shi, Fukuoka 806-0004 (JP); SUZUKI, Takahiko, Kitakyushu-shi, Fukuoka 806-0004 (JP)
(74) Representative: Grünecker Patent- und Rechtsanwälte PartG mbB

(57) **Abstract**

A collection module (204) of a production system (1) is configured to collect synchronously collected data synchronized with a control period of a first industrial machine (20) configured to control a second industrial machine (30). An execution module (205) is configured to execute predetermined processing on all or a part of the synchronously collected data to acquire output data. A transmission module (206) is configured to transmit the output data to an external device (10).

## Description

### BACKGROUND OF THE INVENTION

### Field of the Invention

The present disclosure relates to a production system, a data transmission method, and a program.

### Description of the Related Art

In WO 2015/068210 A1, there is described a system in which an industrial machine configured to control another industrial machine acquires data relating to an operation of the another industrial machine and transmits the data to an external device that is communicatively connected to the industrial machine.

### SUMMARY OF THE INVENTION

An object to be achieved by one aspect of the present disclosure is to reduce, for example, a processing load on an external device.

According to one aspect of the present disclosure, there is provided a production system including: a collection module configured to collect synchronously collected data synchronized with a control period of a first industrial machine configured to control a second industrial machine; an execution module configured to execute predetermined processing on all or a part of the synchronously collected data to acquire output data; and a transmission module configured to transmit the output data to an external device.

According to one aspect of the present disclosure, there is provided a data transmission method including: collecting synchronously collected data synchronized with a control period of a first industrial machine configured to control a second industrial machine; executing predetermined processing on all or a part of the synchronously collected data to acquire output data; and transmitting the output data to an external device.

According to one aspect of the present disclosure, there is provided a program for causing a computer to function as: a collection module configured to collect synchronously collected data synchronized with a control period of a first industrial machine configured to control a second industrial machine; an execution module configured to execute predetermined processing on all or a part of the synchronously collected data to acquire output data; and a transmission module configured to transmit the output data to an external device.

According to one aspect of the present disclosure, the collection module is configured to collect the synchronously collected data for each control period, the execution module is configured to execute the predetermined processing to acquire the output data for each control period, and the transmission module is configured to transmit the output data acquired for each control period to the external device.

According to one aspect of the present disclosure, the execution module is configured to complete the predetermined processing to acquire the output data by an end of the control period.

According to one aspect of the present disclosure, the execution module is configured to execute the predetermined processing on a part of the synchronously collected data to acquire the output data, and the transmission module is configured to transmit, to the external device, a data section of the synchronously collected data on which the predetermined processing has not been executed and the output data.

According to one aspect of the present disclosure, the transmission module is configured to transmit, to the external device, the data section and the output data having the same time information assigned thereto.

According to one aspect of the present disclosure, the first industrial machine includes a control circuit configured to control the second industrial machine, and the time information is time information recorded in the control circuit.

According to one aspect of the present disclosure, the execution module is configured to execute the predetermined processing on a section of the synchronously collected data specified by a user to acquire the output data.

According to one aspect of the present disclosure, the first industrial machine includes: a first control circuit configured to control the second industrial machine; and a second control circuit including the collection module, the execution module, and the transmission module, the collection module is configured to collect the synchronously collected data stored in the first control circuit, and write the collected synchronously collected data into a synchronous area in the second control circuit, the execution module is configured to execute the predetermined processing on all or a part of the synchronously collected data written in the synchronous area, and write the acquired output data into a buffer area in the second control circuit, and the transmission module is configured to transmit the output data written in the buffer area to the external device.

According to one aspect of the present disclosure, the execution module is configured to execute mutually different kinds of the predetermined processing on a plurality of data sections included in the synchronously collected data to acquire a plurality of pieces of output data, and the transmission module is configured to transmit the plurality of pieces of output data to the external device.

According to one aspect of the present disclosure, the predetermined processing is filtering processing, scaling processing, or offset processing.

### EFFECT OF THE INVENTION

According to the present disclosure, it is possible to reduce, for example, the processing load on the external device.

### BRIEF DESCRIPTION OF THE DRAWINGS

FIG. 1 is a diagram for illustrating an example of an overall configuration of a production system according to an embodiment of the present disclosure.
FIG. 2 is a diagram for illustrating a flow of processing for collecting synchronously collected data.
FIG. 3 is a functional block diagram for illustrating functions to be implemented in the production system.
FIG. 4 is a table for showing an example of the synchronously collected data stored in a synchronous area.
FIG. 5 is a flowchart for illustrating an example of processing to be executed in the production system.

### DESCRIPTION OF THE EMBODIMENTS

### [1. Overall Configuration of Production System]

When an external device collects synchronously collected data synchronized with a control period of an industrial machine configured to control another industrial machine and the external device executes predetermined processing on the synchronously collected data, the external device is required to execute a large number of kinds of processing, and hence a processing load on the external device may increase. As a result of extensive research and development for reducing the processing load on the external device, the inventors have conceived of a novel and original production system and the like. A detailed description is now given of the production system and the like according to an embodiment of the present disclosure.

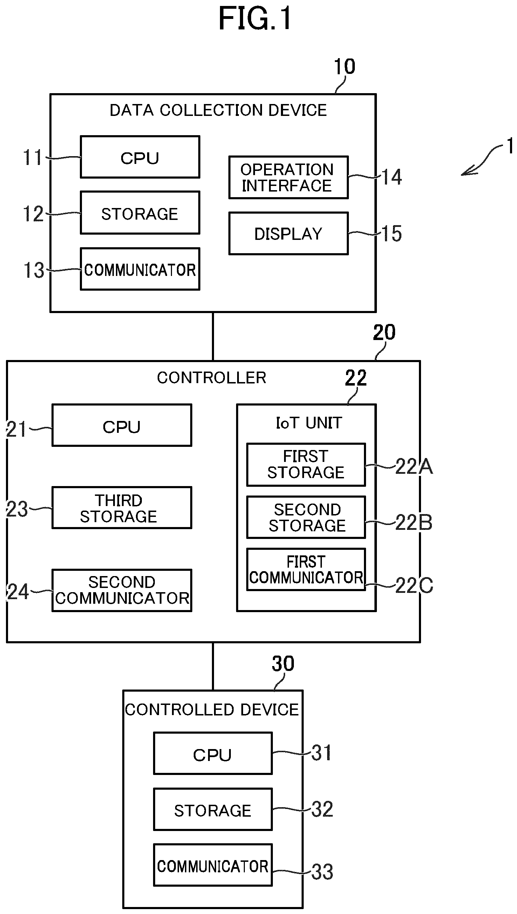

FIG. 1 is a diagram for illustrating an example of an overall configuration of the production system. As illustrated in FIG. 1, a production system 1 includes a data collection device 10, a controller 20, and a controlled device 30. In this embodiment, the data collection device 10 and the controller 20 are connected to each other through a general network, for example, an Ethernet (trademark). The controller 20 and the controlled device 30 are connected to each other through a network for industrial machines. The network for connecting machines to each other is not limited to the example of this embodiment, and may be any network.

The data collection device 10 is an example of an external device. Accordingly, the term "data collection device 10" as used in this embodiment can be read as "external device." The external device is a device different from an industrial machine described later. The external device is communicatively connected to the industrial machine through the network. For example, the external device is configured to collect data relating to the operation of the industrial machine. In addition, for example, the external device is configured to analyze the operation of the industrial machine and provide feedback of an analysis result to the industrial machine.

For example, the data collection device 10 is a personal computer, a server computer, a cellular phone (including a smartphone), or a mobile terminal (including a tablet terminal). The data collection device 10 may be a kind of the industrial machines. The data collection device 10 includes a CPU 11, a storage 12, a communicator 13, an operation interface 14, and a display 15. The "collection" as used herein has the same meaning as "reception" or "acquisition."

The CPU 11 includes at least one processor. The storage 12 includes a RAM or a hard disk drive, and is configured to store various programs and data. The CPU 11 is configured to execute various types of processing based on those programs and data. The communicator 13 includes a network card and a communication interface, for example, various types of communication connectors, and is configured to communicate to/from other devices. The operation interface 14 is an input device such as a mouse and a keyboard. The display 15 is a liquid crystal display, an organic EL display, or the like, and is configured to display various types of screens in accordance with an instruction from the CPU 11.

The controller 20 is an example of the industrial machine (first industrial machine). Accordingly, the term "controller 20" as used in this embodiment can be read as "industrial machine (first industrial machine)." The industrial machine is a collective term for machines configured to assist or substitute human work and peripheral machines thereof. For example, in addition to the controller 20, the controlled device 30 also corresponds to the industrial machine. For example, a programmable logic controller (PLC), a robot controller, an industrial robot, a motor controller, a servo amplifier, an inverter, a converter, a machine tool, a conveyance device, or a semiconductor manufacturing apparatus corresponds to the industrial machine. The controller 20 is configured to control at least one controlled device 30. The production system 1 may be referred to as "cell," which is a unit smaller than a line. In this case, the controller 20 may be referred to as "cell controller."

The controller 20 includes a CPU 21, an Internet-of-Things (IoT) unit 22, a third storage 23, and a second communicator 24. The physical configuration of each of the CPU 21, the third storage 23, and the second communicator 24 may be the same as that of the CPU 11, the storage 12, and the communicator 13, respectively. The CPU 21 may include at least one of a volatile memory or a nonvolatile memory. For example, the CPU 21 may include a memory called "cache memory." The CPU 21 stores a variable described later.

The CPU 21 is an example of a first control circuit. Accordingly, the CPU 21 as used in this embodiment can be read as "first control circuit." The first control circuit is configured to control another industrial machine described later. The first control circuit is not limited to a general-purpose processor, and may be any circuit. For example, the first control circuit may be a circuit called "FPGA" or "ASIC." The first control circuit is a kind of circuitry.

The IoT unit 22 is an example of a second control circuit. Accordingly, the IoT unit 22 as used in this embodiment can be read as "second control circuit." The second control circuit is a circuit configured to transmit data to the external device. The second control circuit is not limited to the circuit used for IoT, and may be any circuit. For example, the second control circuit may be a circuit called "FPGA" or "ASIC." For example, the second control circuit may be a general-purpose processor. The second control circuit is a kind of circuitry.

The IoT unit 22 is configured to transmit data to another computer through the network. For example, the IoT unit 22 includes a first storage 22A, a second storage 22B, and a first communicator 22C. The first storage 22A and the second storage 22B may each be the same as the storage 12. The first communicator 22C may be the same as the communicator 13. For example, the first communicator 22C is mainly used for communication to/from the data collection device 10, and the second communicator 24 is mainly used for controlling the controlled device 30. The IoT unit 22 may include another configuration, for example, a CPU. When the CPU 21 is provided with a data collection function, the IoT unit 22 may be omitted.

The controlled device 30 is an example of another industrial machine (second industrial machine). Accordingly, the controller 20 as used in this embodiment can be read as "another industrial machine (second industrial machine) ." The term "industrial machine" has such a meaning as described above. The another industrial machine may be any kind of industrial machine described above. In this embodiment, another industrial machine is controlled by the controller 20. It suffices that another industrial machine is an industrial machine different from the controller 20.

The controlled device 30 includes a CPU 31, a storage 32, and a communicator 33. The physical configuration of each of the CPU 31, the storage 32, and the communicator 33 may be the same as that of each of the CPU 11, the storage 12, and the communicator 13, respectively. The controlled device 30 may also include other physical components. For example, the controlled device 30 may include a circuit referred to as "FPGA" or "ASIC." Further, for example, a machine to be controlled, such as a motor or the like, a sensor for detecting an operation of a motor, a camera for photographing a state of a workpiece to be processed, an input/output device, or another industrial machine may be connected to the controlled device 30. The number of controlled devices 30 to be controlled by the controller 20 may be any number. For example, the controller 20 may control only one device, or may control two or more devices.

The programs and data described as being stored in each of the data collection device 10, the controller 20, and the controlled device 30 may be supplied through the network. Moreover, the hardware configuration of each device is not limited to the above-mentioned example, and various types of hardware can be applied. For example, a reader (for example, optical disc drive or memory card slot) configured to read a computer-readable information storage medium and an input/output device (for example, USB terminal) configured to directly connect to an external device may be included. In this case, programs and data stored in the information storage medium may be supplied through the reader or the input/output device.

### [2. Outline of Production System]

In this embodiment, the controller 20 is configured to control the controlled device 30 based on each of the plurality of variables. The variable is referred to by a control program for controlling the controlled device 30. The control program may also rewrite the variable. For example, the variable indicates a result of unfinished calculation or a physical quantity detected by a sensor (for example, a torque value detected by a torque sensor or a rotation speed of a motor detected by a motor encoder). The variable may be a value relating to an operation of the controlled device 30, and may be a value of, for example, a position or a moving speed of a robot arm, a speed of the motor, or a waiting time for waiting for the operation.

For example, when the controlled device 30 executes a plurality of processes in a predetermined order, an execution order of the processes is described in the control program. The controller 20 sends an instruction to the controlled device 30 based on the control program. The variable may be used as an execution condition of the process. For example, the controlled device 30 stores a variable for starting the process, a variable for suspending the process, or a variable for ending the process. The variable may be referred to as "input/output variable." The controller 20 may control the controlled device 30 without particularly using variables.

The "process" is a task or an operation to be performed by the controlled device 30. The process may be composed of only one task, or may be composed of a combination of a plurality of tasks. The process may have any content in accordance with the use of the controlled device 30. For example, the process is recognition of a workpiece, gripping of a workpiece, opening/closing of a door, setting of a workpiece, or machining using a machine tool. The controlled device 30 performs at least one process. The number of processes to be performed by the controlled device 30 may be any number. The controlled device 30 may perform only one process, or may perform a plurality of processes. The controlled device 30 performs the process based on the instruction received from the controller 20 and a device program stored in the controlled device 30 itself.

The device program is a program defining an operation of the controlled device 30. In the device program, each procedure of each process is defined. The device program can be created in any language in accordance with the controlled device 30, and is created through use of, for example, a ladder language or a robot language. In this embodiment, a device program is prepared for each process. Accordingly, when a certain controlled device 30 is to perform "n" processes ("n" is a natural number), the controlled device 30 stores at least "n" device programs.

In this embodiment, the controller 20 collects synchronously collected data synchronized with the control period. The control period is a cycle period to be used for controlling the controlled device 30. For example, a communication cycle period of fixed-cycle communication performed between the controller 20 and the controlled device 30 may correspond to the control period. Further, for example, when variables are periodically (regularly) matched with each other between the controller 20 and the controlled device 30, a cycle period of performing the matching of the variables may correspond to the control period. It suffices that a cycle period of any processing executed periodically by at least one of the controller 20 or the controlled device 30 corresponds to the control period.

The synchronously collected data is data relating to an operation of at least one of the controller 20 or the controlled device 30. The synchronously collected data may be data relating to the operation of both the controller 20 and the controlled device 30, or may be data relating to the operation of any one thereof. In this embodiment, a case in which the synchronously collected data is data relating to the operation of the controlled device 30 is described. In addition, a case in which the synchronously collected data includes a value of at least one variable is described, but the synchronously collected data may indicate information other than the variable. This information is periodically updated.

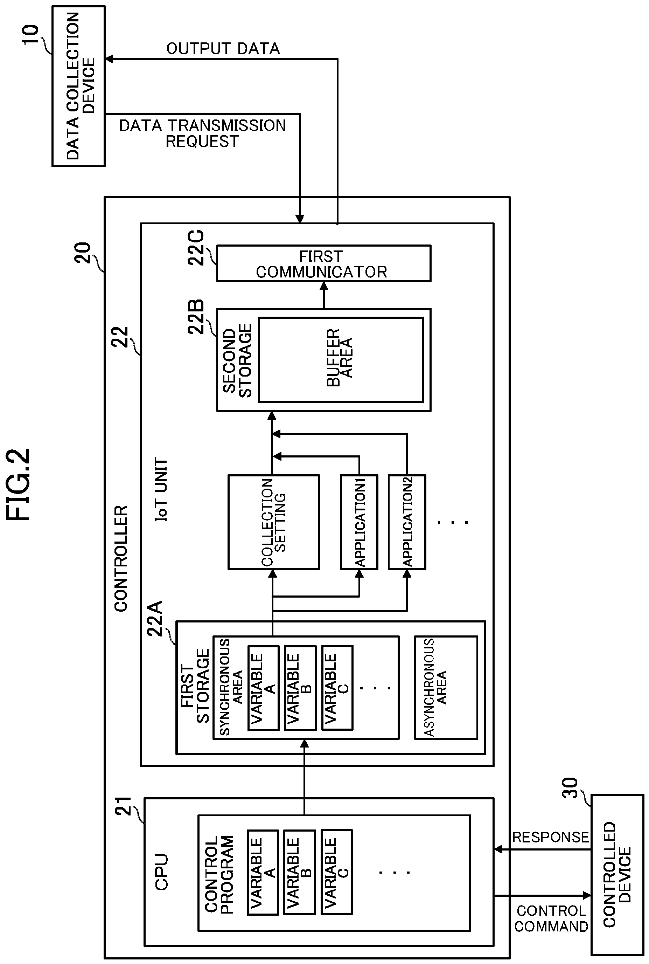

FIG. 2 is a diagram for illustrating a flow of processing for collecting the synchronously collected data. As illustrated in FIG. 2, the CPU 21 is configured to execute a control program based on each of a plurality of variables, and transmit a control command to the controlled device 30. In this embodiment, a case in which each variable is stored in the storage in the CPU 21 is described, but each variable may be stored in the third storage 23. The controlled device 30 is configured to perform an operation corresponding to the control command based on the device program, and transmit a response indicating an operation result. Variables are also stored in the storage 32 of the controlled device 30.

In this embodiment, the IoT unit 22 also stores variables. The variables in the CPU 21 and variables in the IoT unit 22 are also periodically matched with each other. The variables in the IoT unit 22 are used for transmitting data to the data collection device 10. For example, the first storage 22A is divided into a synchronous area and an asynchronous area. The variables are stored in the synchronous area.

The synchronous area is an area in which synchronization is performed between the CPU 21 and the IoT unit 22. The synchronization as used herein is to regularly (periodically) perform the matching of the data. The synchronization is to cause any one of the value stored in the CPU 21 and the value stored in the synchronous area of the first storage 22A to agree with the other (to copy one value to the other).

For example, changing the value stored in the CPU 21 to the value stored in the synchronous area of the IoT unit 22 for a given variable corresponds to the synchronization. Further, for example, changing the value stored in the synchronous area of the IoT unit 22 to the value stored in the CPU 21 for a given variable corresponds to the synchronization. The synchronization may be executed mainly by the CPU 21 or may be executed mainly by the IoT unit 22. The CPU 21 or the IoT unit 22 are subjected to the synchronization for each given fixed cycle period. This cycle period may be the same as, or may be different from, the cycle period of the fixed-cycle communication performed between the CPU 21 and the controlled device 30.

The asynchronous area is an area that is not a synchronous area. The asynchronous area is an area that is not subjected to the synchronization between the CPU 21 and the IoT unit 22. However, the asynchronous area may have data synchronized irregularly (non-periodically). For example, the CPU 21 transfers data collected from the controlled device 30 to the IoT unit 22, and writes the data into the asynchronous area of the first storage 22A. For example, data that is irregularly acquired is written into the asynchronous area.

The IoT unit 22 cleanses the data in the synchronous area, and then transmits the data to the data collection device 10. The cleansing means not transmitting the data stored in the synchronous area as it is to the data collection device 10 but processing (editing) all or a part of the data. The data in the synchronous area may be subjected to any processing, for example, filtering processing, scaling processing, or offset processing. Details of those kinds of processing are described later.

In this embodiment, an application for cleansing the synchronously collected data is stored in the controller 20. For example, a user of the data collection device 10 sets, as a collection setting, information indicating which variable is to be input to which application. The IoT unit 22 inputs the variable indicated in the collection setting to the application indicated in the collection setting. For example, the IoT unit 22 inputs a variable A to an application 1, and executes the filtering processing. The application 1 outputs the output data on the filtered variable A. Meanwhile, for example, the IoT unit 22 inputs a variable B to an application 2, and executes the scaling processing. The application 2 outputs the output data on the scaled variable B.

The IoT unit 22 assigns a time stamp to the output data, and writes the output data to the second storage 22B. The time stamp may be a time managed by the CPU 21 or a time managed by the IoT unit 22. For example, the time is managed based on a timer value. Not only the output data but also both the output data and the data before the cleansing may be transmitted to the data collection device 10.

In this embodiment, the second storage 22B includes at least one buffer area, and the IoT unit 22 writes the output data into the buffer area. For example, the data collection device 10 transmits a data transmission request to the IoT unit 22. The data transmission request is a request for transmission of the output data stored in the buffer area. The IoT unit 22 transmits the output data stored in the buffer area to the data collection device 10 in response to the data transmission request received from the data collection device 10. When the next control period arrives, the synchronization target data is cleansed in the same flow as described above, and the output data is transmitted to the data collection device 10.

As described above, the production system 1 provides a cleansing function to the controller 20, to thereby reduce a processing load on the data collection device 10. In addition, the production system 1 provides the cleansing function not to the CPU 21 but to the IoT unit 22, to thereby reduce a processing load on the CPU 21. This configuration is described below in detail.

### [3. Functions to be implemented in Production System]

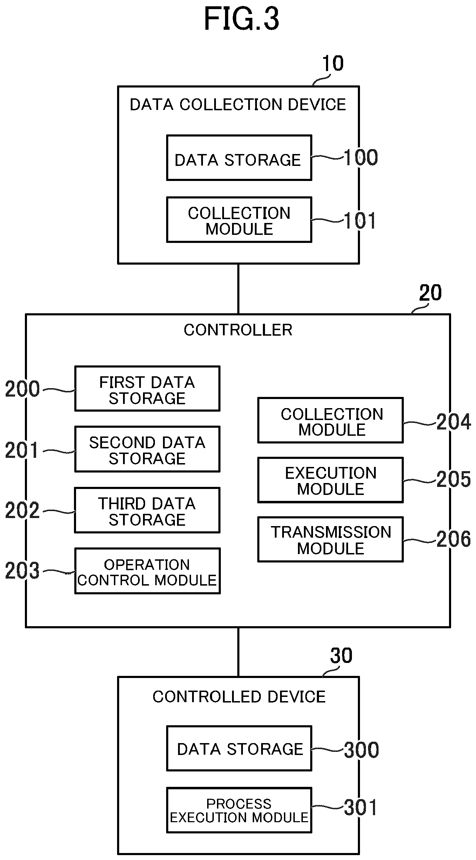

FIG. 3 is a functional block diagram for illustrating functions to be implemented in the production system 1. In this embodiment, functions to be implemented in each of the data collection device 10, the controller 20, and the controlled device 30 are described.

### [3-1. Functions to be implemented by Data Collection Device]

As illustrated in FIG. 3, the data collection device 10 includes a data storage 100 and a collection module 101.

### [Data Storage]

The data storage 100 is mainly implemented by the storage 12. The data storage 100 is configured to store data relating to data collection. For example, the data storage 100 stores the output data collected from the controller 20. In this embodiment, the output data is regularly collected. The output data may store the value of a variable at a certain time point, or may store a chronological change of the value of the variable. In addition, the output data may store only the value of one variable, or may store the values of a plurality of variables. In another example, the output data may store values calculated based on the values of a plurality of variables. The data storage 100 may store all or a part of the synchronously collected data before the cleansing.

Further, for example, the data storage 100 stores the data collected from the asynchronous area of the controller 20. Further, for example, the data storage 100 stores an application for analyzing the operation of the controller 20 or the controlled device 30. For example, this application handles the output data or the data collected from the asynchronous area as input, and handles the analysis result as output. In the application, a relationship between the output data or the data collected from the asynchronous area and the analysis result is defined. Feedback may be provided to the controller 20 based on the analysis result.

### [Collection Module]

The collection module 101 is mainly implemented by the CPU 11. The collection module 101 is configured to collect output data from the controller 20. In this embodiment, the collection module 101 periodically transmits a data transmission request to the controller 20. The data transmission request is a transmission request for output data, and is issued by transmitting data having a predetermined format. The data transmission request may include information for identifying the output data to be transmitted. The controller 20 may transmit a predetermined completion notification to the data collection device 10 when the output data is recorded in the buffer area. The collection module 101 may transmit the data transmission request to the controller 20 when the collection module 101 receives the completion notification transmitted by the controller 20.

For example, the output data is transmitted by a transmission module 206 described later, and the collection module 101 collects the transmitted output data. The data transmission request is not required to be transmitted periodically. For example, when the output data is stored in the buffer area, the controller 20 may transmit a predetermined notification to the data collection device 10, and the data transmission request may be transmitted based on this notification. Further, for example, the controller 20 may spontaneously transmit the output data to the data collection device 10. In this case, the collection module 101 receives the output data spontaneously transmitted by the controller 20.

### [3-2. Functions to be implemented by Controller]

As illustrated in FIG. 3, in the controller 20, a first data storage 200, a second data storage 201, a third data storage 202, an operation control module 203, a collection module 204, an execution module 205, and the transmission module 206 are implemented.

### [First Data Storage]

The first data storage 200 is mainly implemented by the first storage 22A. The first data storage 200 is configured to store data to be collected by the data collection device 10. In this embodiment, the first data storage 200 has a synchronous area and an asynchronous area. That is, the first data storage 200 is divided into a synchronous area and an asynchronous area. The synchronous area is an area in a first address region, and the asynchronous area is an area in a second address region. The first data storage 200 may have a plurality of synchronous areas. The first data storage 200 may have a plurality of asynchronous areas. Each of the synchronous area and the asynchronous area is a storage area in a predetermined address range. The synchronously collected data is stored in the synchronous area.

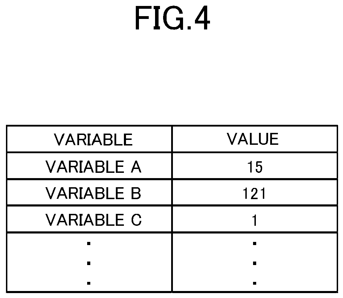

FIG. 4 is a table for showing an example of the synchronously collected data stored in the synchronous area. As shown in FIG. 4, the synchronously collected data is data indicating a current value of each of the plurality of variables. For example, the synchronously collected data presents the current value of each variable. Each variable is stored in a specific register. It is assumed that a relationship between each variable and each register (which variable is stored in which register) is specified in advance by, for example, the user of the controller 20. The current values of the variables in the synchronously collected data and the current values of the variables stored in the third data storage 202 described later are regularly matched with each other. It suffices that data to be synchronized may be stored in the synchronous area, and data other than variables may be stored therein. It suffices that the synchronous area stores data to be synchronized.

### [Second Data Storage]

The second data storage 201 is mainly implemented by the second storage 22B. The second data storage 201 is configured to store the output data. In this embodiment, the second data storage 201 has a buffer area. The buffer area is an area for temporarily storing the output data to be transmitted to the data collection device 10. The buffer area can also be said to be an area to be referred to by the data collection device 10. The second data storage 201 may have a plurality of buffer areas. The buffer area is a storage area in a predetermined address range.

In this embodiment, a case in which the first data storage 200 has the synchronous area and the asynchronous area and the second data storage 201 has the buffer area is described. However, the synchronous area, the asynchronous area, and the buffer area may be present in one storage (physically one piece of hardware). In this case, the IoT unit 22 may include only one storage in place of the plurality of storages. Further, for example, the synchronous area and the asynchronous area may be present in separate storages. Further, for example, the synchronous area and the buffer area may be present in one storage while the asynchronous area may be present in another storage. Further, for example, the asynchronous area and the buffer area may be present in one storage while the synchronous area may be present in another storage.

### [Third Data Storage]

The third data storage 202 is mainly implemented by at least one of the storage in the CPU 21 or the third storage 23. The third data storage 202 is configured to store data required for controlling the controlled device 30. For example, the third data storage 202 stores the current value of each of the plurality of variables. The third data storage 202 stores the current value of each variable. Each variable is stored in a specific register. It is assumed that a relationship between each variable and each register (which variable is stored in which register) is specified in advance by, for example, a creator of the control program. The variables in the third data storage 202 and the variables in the first data storage 200 are synchronized with each other. Accordingly, the third data storage 202 stores data having the same contents as those of the synchronously collected data shown in FIG. 4.

All the variables may be set as collection targets, but in this embodiment, it is assumed that only a part of variables is set as collection targets. For example, when the user of the data collection device 10 and the user of the controller 20 are different from each other, a part or all of variables allowed to be disclosed to the user of the data collection device 10 may be set as collection targets. It is assumed that the matching of the variables allowed to be disclosed is performed between the first data storage 200 and the third data storage 202.

Further, for example, the third data storage 202 stores the control program and parameters. In addition, for example, the third data storage 202 may store another program, for example, firmware, or may store a program for transmitting variable data to the data collection device 10. Further, for example, the third data storage 202 may store a variable definition indicating a definition of the variables disclosed to the user of the data collection device 10. When the variable definition is set, all or a part of the variables indicated in the variable definition are subjected to the data collection.

The data stored in the controller 20 is not limited to the above-mentioned example. For example, the controller 20 may store the application for the cleansing. In addition, for example, the controller 20 may store the collection setting. Further, for example, the controller 20 may store data for defining a register corresponding to each variable. Further, for example, the controller 20 may store information enabling identification of the controlled device 30 to be controlled by the controller 20 itself. Further, for example, the controller 20 may store information enabling identification of the data collection device 10. Those pieces of data may be stored in any one of the first data storage 200, the second data storage 201, and the third data storage 202.

### [Operation Control Module]

The operation control module 203 is mainly implemented by the CPU 21. The operation control module 203 is configured to control the operation of the controlled device 30 based on the control program. For example, the operation control module 203 sends an instruction to the controlled device 30, and the controlled device 30 operates based on the instruction. In this embodiment, the operation control module 203 periodically updates each of the plurality of variables to control the controlled device 30. For example, when the controlled device 30 operates based on the value of the variables associated with the device program, the operation control module 203 sends, to the controlled device 30, an instruction to change the value of the variable for starting the device program. The controlled device 30 executes the device program by changing the value of the variable based on the instruction. When the variable is not particularly used for controlling the operation of the controlled device 30, the operation control module 203 may control the operation of the controlled device 30 by transmitting a command indicating the operation to be executed by the controlled device 30.

### [Collection Module]

The collection module 204 is mainly implemented by the IoT unit 22. The collection module 204 is configured to collect the synchronously collected data synchronized with the control period of the controller 20 controlling the controlled device 30. For example, the collection module 204 collects the synchronously collected data stored in the third data storage 202, and writes the collected synchronously collected data into the synchronous area in the first data storage 200.

The collection module 204 collects the synchronously collected data for each control period. The collection module 204 periodically collects the synchronously collected data. For example, the collection module 204 executes timekeeping processing to determine whether or not a new cycle period has arrived. When the collection module 204 determines that a new cycle period has arrived, the collection module 204 transmits, to the third data storage 202, a read request for the synchronously collected data stored in the third data storage 202, and collects the synchronously collected data. The synchronously collected data may be spontaneously transmitted by the CPU 21 instead of being spontaneously read by the collection module 204. In this case, the collection module 204 collects the synchronously collected data spontaneously transmitted by the CPU 21.

### [Execution Module]

The execution module 205 is mainly implemented by the IoT unit 22. The execution module 205 is configured to execute predetermined processing on all or a part of the synchronously collected data to acquire the output data. The predetermined processing is processing for processing data, for example, filtering processing, scaling processing, or offset processing. The predetermined processing can also be said to be some kind of editing or calculation on the data. The description on the cleansing in this embodiment can be read as the predetermined processing.

The filtering processing is processing for extracting a part of data satisfying a predetermined condition. For example, processing for extracting only a signal having a frequency equal to or lower than a specific frequency, processing for extracting only a signal having a frequency equal to or higher than a specific frequency, or processing for extracting only a signal within a specific frequency range corresponds to the filtering processing. The scaling processing is processing for changing a scale of data. The offset processing is processing for changing an offset of data. A threshold value of the filtering processing, a value of a scale change amount of the scaling processing, and a value of an offset amount of the offset processing may be fixed values, or may be variable values.

In this embodiment, it is assumed that a location to be processed in the synchronously collected data and an application to process the location are defined in the collection setting. It is assumed that contents of the processing to be performed on that location are defined in the application. The execution module 205 refers to the collection setting to identify the location to be processed and the application. The execution module 205 inputs the identified location to the identified application. The application executes predetermined processing, and outputs the output data. The execution module 205 acquires the output data output from the application.

In this embodiment, the synchronously collected data is collected for each control period, and hence the execution module 205 executes, for each control period, predetermined processing to acquire the output data. Each time the control period arrives, the execution module 205 executes the predetermined processing on the synchronously collected data, which has been newly collected, to acquire new output data.

For example, the execution module 205 completes the predetermined processing to acquire the output data by the end of the control period. The execution module 205 executes the predetermined processing on the synchronously collected data collected in a given control period. In this embodiment, description is given of a case in which the predetermined processing is executed on given synchronously collected data during a control period succeeding a control period in which the synchronously collected data is collected. The predetermined processing may be executed during the control period in which the synchronously collected data is collected, or when the first data storage 200 can accumulate a certain amount of synchronously collected data, the predetermined processing may be executed during the second succeeding control period or a subsequent control period.

The execution module 205 completes the predetermined processing by the end of the next control period (before the second succeeding control period arrives). Accordingly, a time point at which the predetermined processing for given synchronously collected data is completed is earlier than a time point at which the control period succeeding the control period in which the synchronously collected data is collected ends. For example, the execution module 205 determines whether or not the collection of the synchronously collected data in a given control period is completed. The execution module 205 immediately executes the predetermined processing in response to the determination that the collection is completed. The execution module 205 completes the predetermined processing before the next control period is completed.

For example, when the execution module 205 executes the predetermined processing on a part of the synchronously collected data to acquire the output data, the execution module 205 may acquire the output data by executing the predetermined processing on a section of the synchronously collected data specified by the user. In this embodiment, this user is the user of the data collection device 10, but may be another user such as the user of the controller 20 or the controlled device 30. In this embodiment, the section specified by the user is defined in the collection setting. The execution module 205 refers to the collection setting to identify a section to be processed.

In this embodiment, the execution module 205 executes the predetermined processing on all or a part of the synchronously collected data written in the synchronous area, and writes the acquired output data into the buffer area in the second data storage 201.

For example, the execution module 205 may execute mutually different kinds of the predetermined processing on a plurality of data sections included in the synchronously collected data to acquire a plurality of pieces of output data. In this case, the execution module 205 acquires a plurality of pieces of output data based on each of a plurality of applications. The execution module 205 associates the same time information with each piece of output data.

### [Transmission Module]

The transmission module 206 is mainly implemented by the IoT unit 22. The transmission module 206 is configured to transmit the output data to the data collection device 10. In this embodiment, the data collection device 10 regularly transmits a data transmission request to the controller 20. When the transmission module 206 receives the data transmission request, the transmission module 206 transmits the data to the data collection device 10. The transmission module 206 transmits the output data in response to the reception of the data transmission request (on condition that the request has been received). The controller 20 may transmit a predetermined completion notification to the data collection device 10 when preparation for the transmission of the output data is completed. The data collection device 10 may transmit the data transmission request to the controller 20 when the data collection device 10 receives the completion notification.

For example, the transmission module 206 transmits the output data acquired for each control period to the data collection device 10. The transmission module 206 may transmit the output data to the data collection device 10 each time the control period arrives, or may collectively transmit the pieces of output data for each of a plurality of control periods at one time.

Further, for example, the transmission module 206 may transmit a data section of the synchronously collected data on which the predetermined processing has not been executed and the output data to the data collection device 10. The data section on which the predetermined processing has not been executed is all or a part of sections other than the section subjected to the predetermined processing. It is assumed to be defined in the collection setting which section is to be transmitted. The transmission module 206 refers to the collection setting to identify a data section to be transmitted among data sections of the synchronously collected data on which the predetermined processing has not been executed. The transmission module 206 transmits the identified data section and the output data. In this embodiment, the same time information is assigned to those pieces of data, and hence the transmission module 206 transmits, to the data collection device 10, the data section and the output data each having the same time information assigned thereto. For example, the time information may be the time information recorded in the CPU 21 controlling the controlled device 30.

In this embodiment, the output data is written into the buffer area of the second data storage 201, and hence the transmission module 206 transmits the output data written in the buffer area to the data collection device 10. The transmission module 206 may transmit a plurality of pieces of output data to the data collection device 10.

### [3-3. Functions to be implemented by Controlled Device]

As illustrated in FIG. 3, in the controlled device 30, a data storage 300 and a process execution module 301 are implemented.

### [Data Storage]

The data storage 300 is mainly implemented by the storage 32. The data storage 300 is configured to store the data required for the controlled device 30 to execute a process. For example, the data storage 300 stores the device program and current values of the variables. The current values of the variables stored in the data storage 300 is regularly matched with the current values of the variables stored in the third data storage 202. The value of each variable is stored in a predetermined register.

### [Process Execution Module]

The process execution module 301 is mainly implemented by the CPU 31. The process execution module 301 is configured to execute a predetermined process based on the device program stored in the data storage 300 and an instruction received from the controller 20. For example, when the controller 20 is to start a certain device program, the controller 20 transmits to the controlled device 30 an instruction to set a variable associated with the device program to a predetermined value. When the controlled device 30 receives the instruction, the controlled device 30 changes the variable to a predetermined value. When the process execution module 301 detects that the variable has been changed to the predetermined value, the process execution module 301 executes the device program associated with the variable.

When the process indicated by the device program ends, the process execution module 301 changes the variable associated with the device program to a predetermined value, and transmits the fact to the controller 20. Then, when executing another device program, the controller 20 transmits to the controlled device 30 an instruction to set the variable associated with the another device program to a predetermined value, and the process execution module 301 executes the another device program. When the execution order of a plurality of device programs is defined in the controlled device 30, it is not required to transmit the end of the device program to the controller 20, and the process execution module 301 may execute the plurality of device programs one after another.

### [4. Processing to be executed in Production System]

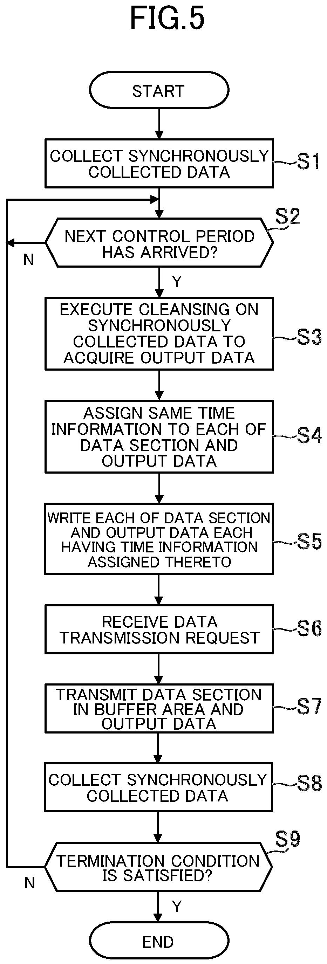

FIG. 5 is a flowchart for illustrating an example of processing to be executed in the production system 1. The processing illustrated in FIG. 5 is an example of the processing to be executed by the functional blocks illustrated in FIG. 3. In FIG. 5, description is given of processing to be performed by the IoT unit 22 to transmit the output data, and processing to be performed by the controller 20 to control the controlled device 30 is omitted.

As illustrated in FIG. 5, the IoT unit 22 of the controller 20 collects the current value of each variable stored in the CPU 21 as synchronously collected data when the first control period arrives, and writes the synchronously collected data into the synchronous area of the first storage 22A (Step S1). In Step S1, the IoT unit 22 executes the timekeeping processing to determine whether or not the first control period has arrived. When the IoT unit 22 determines that the first control period has arrived, the IoT unit 22 transmits a read request for the synchronously collected data to the CPU 21. When the CPU 21 receives the read request, the CPU 21 transmits the current value of each variable stored in the CPU 21 itself.

The IoT unit 22 determines whether or not the next control period has arrived (Step S2). In Step S2, in the same manner as in Step S1, it is determined by the timekeeping processing whether or not the next control period has arrived. When it is not determined that the next control period has arrived (N in Step S2), the processing of Step S2 is executed again. Meanwhile, when it is determined that the next control period has arrived (Y in Step S2), the IoT unit 22 executes the cleansing on the synchronously collected data written in the synchronous area to acquire the output data (Step S3). In Step S3, the IoT unit 22 inputs a part of the synchronously collected data to the application based on the collection setting. The application executes the cleansing on the input data section to output the output data.

The IoT unit 22 assigns the same time information to each of an uncleansed data section of the synchronously collected data and the output data acquired in Step S3 (Step S4). In Step S4, the IoT unit 22 inquires the CPU 21 for the time information. When the CPU 21 receives the inquiry, the CPU 21 acquires the time information stored in the CPU 21 itself to transmit the time information to the IoT unit 22. The time information may be acquired at a time of collecting the synchronously collected data.

The IoT unit 22 writes each of the data section and the output data each having the time information assigned thereto in Step S4 into the buffer area of the second storage 22B (Step S5). When the IoT unit 22 receives the data transmission request from the data collection device 10 (Step S6), the IoT unit 22 transmits the data section in the buffer area and the output data to the data collection device 10 (Step S7). The data collection device 10 periodically transmits a data transmission request to the controller 20. In Step S6, the IoT unit 22 transmits the data section in the buffer area and the output data in response to the reception of the data transmission request.

The subsequent processing of Step S8 is the same as that of Step S1. The processing of Step S8 may be executed before the processing from Step S3 to Step S7, or those processing steps may be executed in parallel. The latest synchronously collected data is collected by the processing of Step S8. The latest synchronously collected data is cleansed in the next control period.

The IoT unit 22 determines whether or not a predetermined termination condition is satisfied (Step S9). The termination condition is a freely-set condition for terminating this processing, for example, is a condition that a predetermined date and time arrives, that a condition for ending the data collection which is defined in the collection setting is satisfied, or that the controller 20 is powered off. When it is not determined that the termination condition is satisfied (N in Step S9), the processing returns to Step S2. When it is determined that the termination condition is satisfied (Y in Step S9), this processing ends.

With the production system 1 described above, the output data acquired by executing the predetermined processing on all or a part of the synchronously collected data is transmitted to the data collection device 10, to thereby eliminate the requirement to cause the data collection device 10 to execute the predetermined processing, and hence the processing load on the data collection device 10 can be reduced. For example, when filtering is executed as the predetermined processing, the amount of data to be transmitted to the data collection device 10 can be narrowed down, and hence the communication load can be reduced, or a memory consumption amount of the data collection device 10 can be reduced.

Further, the production system 1 collects the synchronously collected data for each control period to acquire the output data, and transmits the output data acquired for each control period to the data collection device 10, to thereby be able to significantly reduce the number of times that the processing is to be executed by the data collection device 10 and to effectively reduce the processing load on the data collection device 10. For example, when the amount of data is narrowed down through the filtering, the communication load can be effectively reduced, and the memory consumption amount of the data collection device 10 can be effectively reduced.

Further, the production system 1 completes the predetermined processing to acquire the output data by the end of the control period, to thereby be able to prevent the synchronously collected data for the next control period from being collected while the output data cannot be acquired even after the end of the control period and to reliably acquire the output data.

Further, the production system 1 transmits, to the data collection device 10, the section of the synchronously collected data on which the predetermined processing has not been executed and the output data corresponding to the section on which the predetermined processing has been executed, to thereby be able to transmit, to the data collection device 10, a data section on which the predetermined processing is not required to be executed as well.

Further, the production system 1 assigns the same time information to each of the data section and the output data, to thereby be able to match the time of the data section and the time of the output data with each other even when a certain amount of time is taken to acquire the output data.

Further, the production system 1 assigns the time information recorded in the CPU 21 controlling the controlled device 30 to each of the data section and the output data, to thereby be able to cause the data collection device 10 to, for example, analyze the data with reference to the time managed by the CPU 21.

Further, the production system 1 executes the predetermined processing on the section of the synchronously collected data specified by the user to acquire the output data, to thereby be able to execute the predetermined processing on a section desired by the user, and to enhance convenience of the user. In addition, the predetermined processing is not executed on a section of the synchronously collected data that is not required, and hence the processing load on the production system 1 can be reduced.

Further, the production system 1 is provided separately with the CPU 21 for controlling the controlled device 30 and the IoT unit 22 for transmitting data to the data collection device 10, to thereby be able to distribute the processing load, and to prevent problems from occurring in the control of the controlled device 30 and the data transmission. As a result, accuracy of the control can be improved, and the data can be transmitted quickly and accurately.

Further, the production system 1 executes mutually different kinds of the predetermined processing on the plurality of data sections included in the synchronously collected data to acquire a plurality of pieces of output data, and transmits the plurality of pieces of output data to the data collection device 10, to thereby be able to effectively reduce the processing load on the data collection device 10. In addition, the processing is executed from various viewpoints to acquire the output data, to thereby be able to acquire desired output data.

Further, the production system 1 is not required to cause the data collection device 10 to execute the filtering processing, the scaling processing, or the offset processing, and hence the processing load on the data collection device 10 can be reduced.

### [5. Modification Examples]

Note that, the present disclosure is not limited to the embodiment described above. Modifications can be made as appropriate without departing from the gist of the present disclosure.

For example, the IoT unit 22 is not required to collect the synchronously collected data for each control period. When the CPU 21 or the third storage 23 can store variables in a plurality of control periods, the IoT unit 22 may collect chronological change of the variables in the plurality of control periods as the synchronously collected data. In another example, the IoT unit 22 may collectively cleanse the synchronously collected data for each of the plurality of control periods without performing the cleansing for each control period. In addition, for example, the IoT unit 22 may collectively transmit the synchronously collected data for each of the plurality of control periods at once without transmitting the synchronously collected data for each control period.

Further, for example, the IoT unit 22 is not required to complete the cleansing by the end of the control period as long as the synchronously collected data for each of the plurality of control periods can be accumulated in the synchronous area. In addition, for example, the IoT unit 22 may transmit output data to which the time information is not particularly assigned. In another example, the IoT unit 22 may cleanse a section other than the section specified by the user. Further, for example, the IoT unit 22 may cleanse a single section instead of cleansing a plurality of sections of the synchronously collected data.

Further, for example, in the embodiment, the case in which the synchronously collected data is the data relating to the operation of the controlled device 30 has been described, but the synchronously collected data may be the data relating to the operation of the controller 20. In this case, the controller 20 generates synchronously collected data relating to the operation of the controller 20 based on a detection signal from the sensor connected to the controller 20 itself and internal information of the controller 20. A flow of processing in which the synchronously collected data is transmitted to the data collection device 10 is as described in the embodiment.

Further, for example, each of the functions described above may be implemented by any device included in the production system 1. For example, the function described as being implemented by the data collection device 10 may be implemented by the controller 20 or the controlled device 30. Further, for example, the function described as being implemented by the controller 20 may be implemented by the data collection device 10 or the controlled device 30. Further, for example, each of the functions may be implemented by one computer instead of being shared by a plurality of computers.

Further, the embodiment described above is given as a specific example, and is not to limit the invention disclosed herein to the very configuration and data storage examples of the specific example. A person skilled in the art may make various modifications to the disclosed embodiment with regard to, for example, the shapes and numbers of physical components, data structures, and execution orders of processing. It is to be understood that the technical scope of the invention disclosed herein encompasses such modifications.

## Claims

1. A production system (1), comprising:
a collection module (204) configured to collect synchronously collected data synchronized with a control period of a first industrial machine (20) configured to control a second industrial machine (30);
an execution module (205) configured to execute predetermined processing on all or a part of the synchronously collected data to acquire output data; and
a transmission module (206) configured to transmit the output data to an external device (10).

2. The production system (1) according to claim 1,
wherein the collection module (204) is configured to collect the synchronously collected data for each control period,
wherein the execution module (205) is configured to execute the predetermined processing to acquire the output data for each control period, and
wherein the transmission module (206) is configured to transmit the output data acquired for each control period to the external device (10).

3. The production system (1) according to claim 2, wherein the execution module (205) is configured to complete the predetermined processing to acquire the output data by an end of the control period.

4. The production system (1) according to any one of claims 1 to 3,
wherein the execution module (205) is configured to execute the predetermined processing on a part of the synchronously collected data to acquire the output data, and
wherein the transmission module (206) is configured to transmit, to the external device (10), a data section of the synchronously collected data on which the predetermined processing has not been executed and the output data.

5. The production system (1) according to claim 4, wherein the transmission module (206) is configured to transmit, to the external device (10), the data section and the output data each having the same time information assigned thereto.

6. The production system (1) according to claim 5,
wherein the first industrial machine (20) includes a control circuit (21) configured to control the second industrial machine (30), and
wherein the time information is time information recorded in the control circuit (21).

7. The production system (1) according to any one of claims 1 to 6, wherein the execution module (205) is configured to execute the predetermined processing on a section of the synchronously collected data specified by a user to acquire the output data.

8. The production system (1) according to any one of claims 1 to 7,
wherein the first industrial machine (20) includes:
a first control circuit (21) configured to control the second industrial machine (30); and
a second control circuit (22) including the collection module (204), the execution module (205), and the transmission module (206),
wherein the collection module (204) is configured to collect the synchronously collected data stored in the first control circuit (21), and write the collected synchronously collected data into a synchronous area in the second control circuit (22),
wherein the execution module (205) is configured to execute the predetermined processing on all or a part of the synchronously collected data written in the synchronous area, and write the acquired output data into a buffer area in the second control circuit (22), and
wherein the transmission module (206) is configured to transmit the output data written in the buffer area to the external device (10).

9. The production system (1) according to any one of claims 1 to 8,
wherein the execution module (205) is configured to execute mutually different kinds of the predetermined processing on a plurality of data sections included in the synchronously collected data to acquire a plurality of pieces of output data, and
wherein the transmission module (206) is configured to transmit the plurality of pieces of output data to the external device (10).

10. The production system (1) according to any one of claims 1 to 9, wherein the predetermined processing is filtering processing, scaling processing, or offset processing.

11. A data transmission method, comprising:
collecting synchronously collected data synchronized with a control period of a first industrial machine (20) configured to control a second industrial machine (30);
executing predetermined processing on all or a part of the synchronously collected data to acquire output data; and
transmitting the output data to an external device (10).

12. A program for causing a computer to function as:
a collection module (204) configured to collect synchronously collected data synchronized with a control period of a first industrial machine (20) configured to control a second industrial machine (30);
an execution module (205) configured to execute predetermined processing on all or a part of the synchronously collected data to acquire output data; and
a transmission module (206) configured to transmit the output data to an external device (10).
